# EUROPEAN PATENT SPECIFICATION

(11) **EP 2 084 704 B1**
(45) Date of publication and mention of the grant of the patent: **18.04.2012**
(21) Application number: 07833387.9
(22) Date of filing: 17.10.2007
(51) Int. Cl.: G10L 19/00, G10L 19/14

(54) **APPARATUS AND METHOD FOR TRANSMITTING OR REPLAYING MULTI-CHANNEL AUDIO SIGNAL**
VORRICHTUNG UND VERFAHREN ZUM ÜBERTRAGEN ODER WIEDERABSPIELEN EINES MEHRKANAL-AUDIOSIGNALS
APPAREIL ET PROCÉDÉ POUR TRANSMETTRE OU REDIFFUSER UN SIGNAL AUDIO MULTIPLEX

(30) Priority: 17.10.2006 KR 20060100877
(43) Date of publication of application: 05.08.2009
(73) Proprietor: Electronics and Telecommunications Research Institute, Daejeon-city 305-350 (KR)
(72) Inventor: LEE, Yong-Ju, Yuseong-gu Daejon 305-804 (KR); SEO, Jeong-Il, Yuseong-gu Daejon 305-728 (KR); BEACK, Sueng-Kwon, Yuseong-gu Daejon 305-340 (KR); JANG, Dae-Young, Yuseong-gu Daejon 305-325 (KR); HONG, Jin-Woo, Yuseong-gu Daejon 305-340 (KR)
(74) Representative: Betten & Resch
(86) International application number: PCT/KR2007/005078
(87) International publication number: WO 2008/048042

(56) References cited:
- WO-A1-2006/016735
- US-A- 5 481 543
- US-B1- 6 801 575
- HERRE J. ET AL.: 'The Reference Model Architecture for MPEG Spatial Audio Coding' AUDIO ENGINEERING SOCIETY THE 118TH CONVENTION 28 May 2005 - 31 May 2005, pages 1 - 13, XP003011724

## Description

### TECHNICAL FIELD

The present invention relates to an apparatus and method for transmitting and reproducing a multichannel audio signal; and, more particularly, to an apparatus and method for effectively transmitting and reproducing a multichannel audio signal while sustaining reverse-compatibility with a stereo audio based system.

This work was supported by the Information Technology (IT) research and development program of the Korean Ministry of Information and Communication (MIC) and/or the Korean Institute for Information Technology Advancement (IITA) [2006-S-017-01, "Development of advanced transmission technology for the terrestrial DMB system"].

### BACKGROUND ART

Recently, researchers are studying to develop a method for encoding a multichannel audio. A multichannel audio encoding and decoding technology has been standardized even in a MPEG-surround technology. In the multichannel audio encoding and decoding technology, the multichannel audio is divided into a down-mixed stereo audio signal and an auxiliary signal. Here, the down-mixed stereo signal is encoded based on an audio coding method such as advanced audio coding (AAC) and bit sliced arithmetic coding (BSAC).

Digital multimedia broadcasting (DMB) is a multimedia service receivable in a mobile environment. The DMB service is provided through a portable phone, a personal digital assistance (PDA), and a receiver for a vehicle. The DMB only supports stereo audio. Lately, there have been many studies for developing a method for providing a multichannel audio. In order to provide a multichannel audio service in a stereo based DMB service, it is required to effectively transmit data while maintaining reverse-compatibility with an existing stereo based DMB service.

The multichannel audio is characterized to have a high data rate compared to a stereo audio. The DMB has the shortcoming of a low data rate lower than a medium such as DTV. Particularly, the DMB uses a MPEG-2 Transport Stream (TS), and the specification of a MPEG-2 system defines each of elementary steams to have a unique PID. Due to the definition of the elementary stream (ES), the output rate of a transport stream (TS) may be high although the output rate of the ES is low. An auxiliary signal generated by encoding a multichannel audio has a data rate of ES that is not high. When each frame of the auxiliary signal is packetized to a transport stream (TS) and the TS is transmitted, the output rate of the TS may increase twice than an output rate of the ES. Therefore, there is a demand for developing a method for effectively packetizing and transmitting a multichannel audio while sustaining the reverse-compatibility with existing DMB not to abruptly increase the data rate in order to effectively transmit a multichannel audio through a DMB service.

In a DMB service, it is defined to transmit one video object and one audio object for main video and main audio service. Here, the audio object may be a mono or a stereo audio object. According to the development of a multimedia technology, multimedia services have been commonly provided in a digital television (DTV) field and a digital versatile disc (DVD) field, and the demands for the multichannel audio have increased. According to such trend, a technology for providing a multichannel audio through DMB was introduced, recently. In DMB, a mono or a stereo audio is encoded through BSAC or AAC. In order to transmit a multichannel audio, it is required to transmit additional data. Therefore, it is necessary to modify the existing transmitting method.

In a multichannel encoding method such as MPEG-surround and sound source location cue coding (SSLCC), a method for transmitting and reproducing a multichannel audio by dividing the multichannel audio into a down-mixed stereo signal and auxiliary signal was chosen as a standard. Such a multichannel encoding technology is a proper encoding method for providing the multichannel audio with reverse-compatibility. That is, if a multichannel audio signal is encoded and divided into a down-mixed stereo signal and an auxiliary signal, a down-mixed stereo signal can be used to be comparable with an existing stereo audio based service.

In order to provide a multichannel audio service through digital multimedia broadcasting (DMB), a multichannel audio decoding method was introduced. The multichannel audio encoding method also divides a multichannel audio into a down-mixed stereo signal and auxiliary signal and transmits the down-mixed stereo signal and the auxiliary signal. In the multichannel audio encoding method, the down-mixed stereo signal is coded based on AAC for the reverse-comparability with an existing DMB service. The auxiliary signal is assumed as an additional elementary stream (ES). The auxiliary signal is packetized by an auxiliary signal frame, and the packetized auxiliary signal is transmitted.

However, if the auxiliary signal is transmitted by packetizing the auxiliary signal by a frame, the auxiliary signal is transmitted at a comparatively high data rate in the DMB environment that has a low data rate. The data rate increases because the TS packetization process is performed for each of auxiliary signal frames. That is, at least one of TS packets must be transmitted in order to transmit one auxiliary signal frame.

The document J.Herre et al. "The reference model architecture for MPEG spatial audio coding", 118th AES Convention, Barcelona Spain , 28-31.5.2005 discloses a method for the encoding and decoding of a multichannel audio signal as a downmixed audio signal and a set of auxiliary, i.e. spatial parameters. It further discloses a bitstream structure where a "spatial audio frame data" defines a container for spatial parameters corresponding to one frame of the downmixed audio.

The international patent application WO20060167535 discloses a technique for packetizing audio and video signals for DMB transmission.

The european patent application EP1535806A2 discloses a technique of frame aggregation for the transmission of voice frames by packets in order to reduce header overhead.

### DISCLOSURE

### TECHNICAL PROBLEM

An embodiment of the present invention is directed to providing an apparatus and method for effectively transmitting and reproducing a multichannel audio signal while sustaining reverse-comparability with a stereo audio based signal.

Another embodiment of the present invention is directed to providing an apparatus and method for effectively transmitting and reproducing a multichannel audio signal in a broadcasting environment such as digital multimedia broadcasting (DMB).

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### TECHNICAL SOLUTION

The present invention is defined in the independent claims. The dependent claims define advantageous embodiments thereof.

### ADVANTAGEOUS EFFECTS

According to the present invention, a multichannel audio signal can be effectively transmitted or reproduced while sustaining reverse-compatibility with an existing stereo audio based system. Also, the multichannel audio signal can be effectively transmitted or reproduced in a broadcasting environment such as digital multimedia broadcasting (DMB).

### BRIEF DESCRIPTION OF THE DRAWINGS

Fig. 1 is a block diagram illustrating a multimedia transmitting apparatus in accordance with an embodiment of the present invention.
Fig. 2 is a block diagram illustrating a system coding module shown in Fig. 1.
Fig. 3 is a block diagram illustrating a M4 over M2 module shown in Fig. 1.
Fig. 4 is a flowchart illustrating a multimedia transmitting method in accordance with an embodiment of the present invention.
Fig. 5 is a block diagram illustrating a multimedia reproducing apparatus in accordance with an embodiment of the present invention.
Fig. 6 is a block diagram illustrating a M2 over M4 module shown in Fig. 5.
Fig. 7 is a block diagram illustrating a system decoding module shown in Fig. 5.
Fig. 8 is flowchart illustrating a multimedia reproducing method in accordance with an embodiment of the present invention.

### BEST MODE FOR THE INVENTION

The advantages, features and aspects of the invention will become apparent from the following description of the embodiments with reference to the accompanying drawings, which is set forth hereinafter.

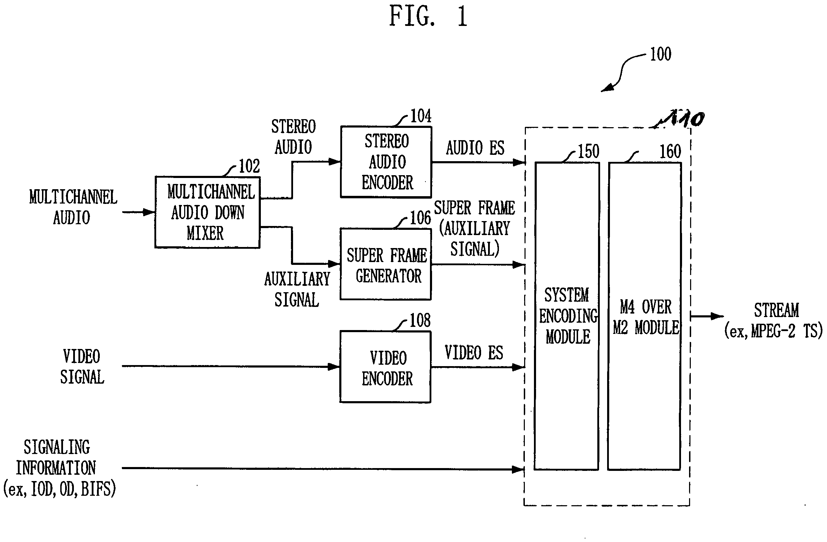

Fig. 1 is a block diagram illustrating a multimedia transmitting apparatus in accordance with an embodiment of the present invention.

Referring to Fig. 1, the multimedia transmitting apparatus 100 includes a multichannel audio down-mixer 102, a stereo audio coder 104, a super-frame generator 106, a video encoder 108, and a packetizer 110. The packetizer 110 includes a system encoding module 150 and a M4 over M2 module 160.

The multichannel audio down-mixer 102 receives a multichannel audio signal and transforms the received multichannel audio signal to a stereo audio signal and an auxiliary signal. The multichannel audio down-mixer 102 outputs the stereo audio signal to the stereo audio encoder 104 and the auxiliary signal to the super frame generator 106. The multichannel audio down-mixer 102 may transform a multichannel audio signal to a mono audio signal and an auxiliary signal. The stereo audio encoder 104 generates an elementary stream (ES) by encoding the stereo audio signal from the multichannel audio down-mixer 102 and provides the ES to the packetizer 110. The super frame generator 106 receives an auxiliary signal from the multichannel audio down-mixer 102 and generates a super frame auxiliary signal by combining a plurality of auxiliary signal frames. The super frame generator 106 generates one super frame auxiliary signal by combining the auxiliary signals of a predetermined number of frames according to the DMB environment.

The video encoder 108 receives a video signal, generates a video element stream (ES) by encoding the received video signal and provides the video ES to the packetizer 110. The packetizer 110 receives an audio/video signal such as an audio ES, a super frame auxiliary signal, and signaling information such as an initial object descriptor (IOD), an object descriptor (OD), and a binary format for scene (BIFS) and packetizes the received audio/video signal and the received signaling information.

The initial object descriptor (IOD) informs an elementary stream ID (ES_ID) of the object descriptor (OD) or the binary format for scene (BIFS) as the first access point of related streams. The OD informs an ES_ID forming an object, and the BIFS arranges objects at a picture. The generated streams of MPEG-2 TS are transmitted to a reproducing apparatus or a storing apparatus through a broadcasting service such as DMB.

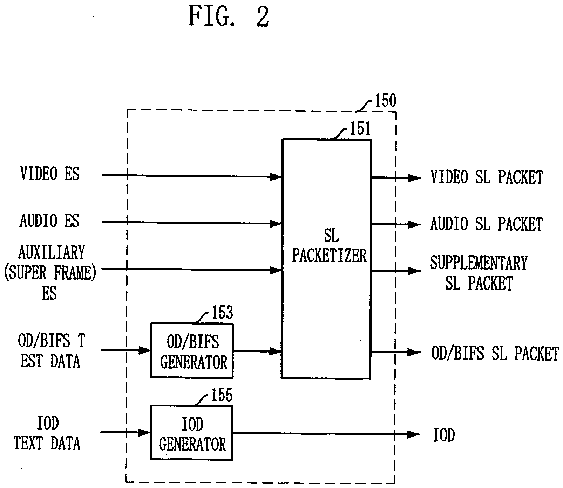

Fig. 2 is a block diagram illustrating a system encoding module shown in Fig. 1.

Referring to Fig. 2, the system encoding module 150 includes a SL packetizer 151, an OD/BIFS generator 153, and an initial object descriptor (IOD) generator 155.

The OD/BIFS generator 153 generates an OD/BIFS encoded stream using an OD/BIFS text data inputted from the outside and outputs the generated OD/BIFS encoded stream. The SL packetizer 151 receives the video ES, the audio ES, the super frame auxiliary signal, and the OD/BIFS encoded stream. Then, the SL packetizer 151 packetizes the received signals to a SL packet according to a mobile multimedia broadcasting specification and outputs the packet. The IOD generator 155 generates an IOD encoding stream using the IOD text data inputted from the outside and outputs the generated IOD encoding stream.

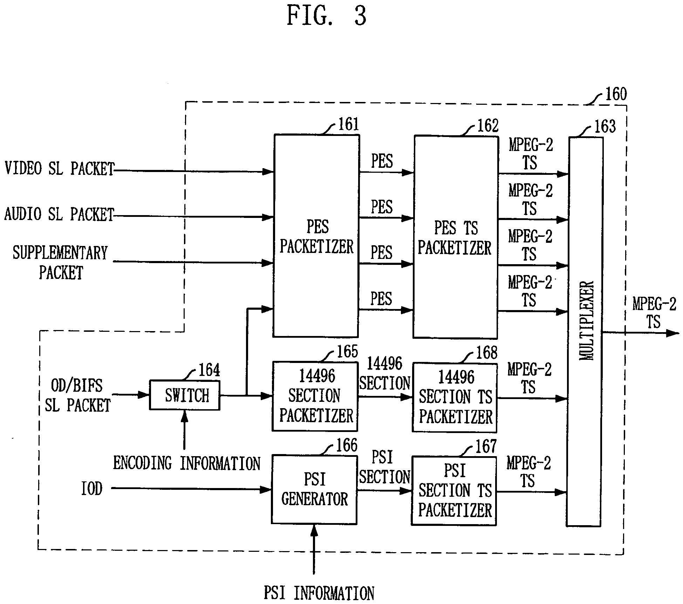

Fig. 3 is a block diagram illustrating a M4 over M2 module shown in Fig. 1.

Referring to Fig. 3, the M4 over M2 module 160 includes a packetized elementary stream (PES) packetizer 161, a PES to TS packetizer 162, a multiplexer 163, a switch 164, a 14496 sector packetizer 165, a PSI generator 166, a PSI to TS packetizer 167, and a 14496 section to TS packetizer 168.

The switch 164 receives an OD/BIFS SL packet from the system encoding module 150 and outputs the OD/BIFS SL packet to a PES packetizer 161 or a 14496 section packetizer 165 according to the encoding information of a SL packet. The PES packetizer 161 receives a video SL packet, an audio SL packet, and an auxiliary signal SL packet from the system encoding module 150 and receives the OD/BIFS SL packet from the switch 164. Then, the packetizer 161 packetizes the received packets to a PES packet and outputs the PES packet to the PES to TS packetizer 162.

The 14496 section packetizer 165 receives an OD/BIFS SL packet from the switch 164, packetizes the received OD/BIFS SL packet to a 14496 section, and outputs the 14496 section to the 14496 section to TS packetizer 168. The program specific information (PSI) generator 166 generates PSI including program association table (PAT) section (PA_Section) and a program map table (PMT) section (PM_section) using IOD information from the system encoding module 150 and outputs the generated PSI to the PSI to TS packetizer 167.

The PES to TS packetizer 162 packetizes the PES packet to a MPEG-2 TS and outputs the MPEG-2 TS to the multiplexor 163. The 14496 to TS packetizer 168 packetizes the input 14496 section to a MPEG-2 TS and outputs the MPEG-2 TS to the multiplexer 163. The PSI to TS packetizer 167 receives PSI information, packetizes the received PSI information to a MPEG-2 TS, and outputs the MPEG-2 TS to the multiplexor 163. The multiplexor 163 multiplexes the MPEG-2 TSs to one TS and outputs the multiplexed MPEG-2 TS.

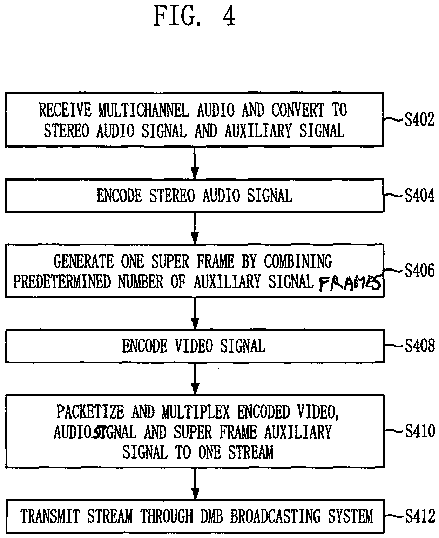

Fig. 4 is a flowchart illustrating a multimedia transmitting method in accordance with an embodiment of the present invention.

Hereinafter, a multimedia transmitting method according to the present embodiment will be described with reference to Figs. 1 to 3.

At first, the multichannel audio down-mixer 102 receives a multichannel audio signal and transforms the received multichannel audio signal to a stereo audio signal and an auxiliary signal at step S402. The generated stereo audio signal is provided to the stereo audio encoder 104. The auxiliary signal is provided to the super frame generator 106. The stereo audio encoder 104 generates an audio ES by compressing and encoding a stereo audio signal provided from the multichannel audio down-mixer 102 at step S404. The super frame generator 106 generates a super frame auxiliary signal by combining the auxiliary signal frames for example three frames at step S406. The super frame generator 106 generates a super frame auxiliary signal by combining auxiliary signals of a predetermined number of frames according to a DMB broadcasting environment. Then, the video encoder 108 generates a video ES by encoding the received video signal at step S408. The packetizer 110 packetizes the audio ES, the super frame auxiliary signal, the video ES, and the signaling information at step S410 and transmits the MPEG-2 TS stream using the DMB broadcasting system at step S412.

For example, the multimedia transmitting method according to the present embodiment can reduce the packetization overhead because the number of packets for the auxiliary signal is reduced by 1/3 when one super frame auxiliary signal is generated by combining auxiliary signal frames, for example, three auxiliary signal frames. Therefore, the multimedia transmitting method according to the present embodiment can effectively transmit the multichannel audio signal at a high data rate even in a broadcasting environment that supports a low transport rate such as a DMB broadcasting environment.

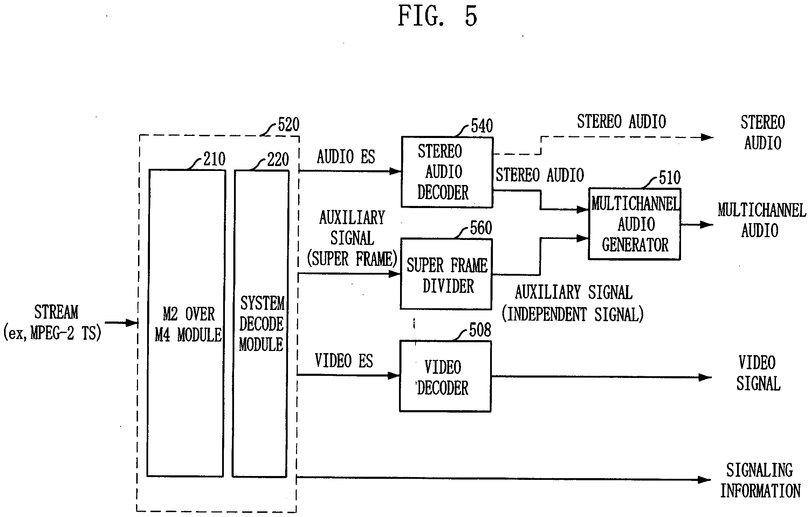

Fig. 5 is a block diagram illustrating a multimedia reproducing apparatus in accordance with an embodiment of the present invention.

As shown in Fig. 5, the multimedia reproducing apparatus 500 includes a depacketizer 502, a stereo audio decoder 504, a super frame divider 506, a video decoder 508, and a multichannel audio generator 510. The depacketizer 502 includes a M2 over M4 module 210 and a system decoding module 220.

The depacketizer 502 separates a packetized audio signal, a packetized video signal, and a packetized super frame auxiliary signal from the MPEG-2 TS stream, and generates an audio ES, a video ES, and a super frame auxiliary signal by depacketizing a MEPG-2 TS. The stereo audio decoder 504 generates a stereo audio signal by decoding an audio ES and providing the generated stereo audio signal to the multichannel audio generator 510. The super frame divider 506 divides the super frame auxiliary signal into auxiliary signal frames. The multichannel audio generator 510 receives a stereo audio signal provided from the stereo audio decoder 504 and the auxiliary signal frames from the super frame divider 506 and generates a multichannel audio signal. The video decoder 508 receives a video ES from the depacketizer 502 and generates an image by decoding the received video ES.

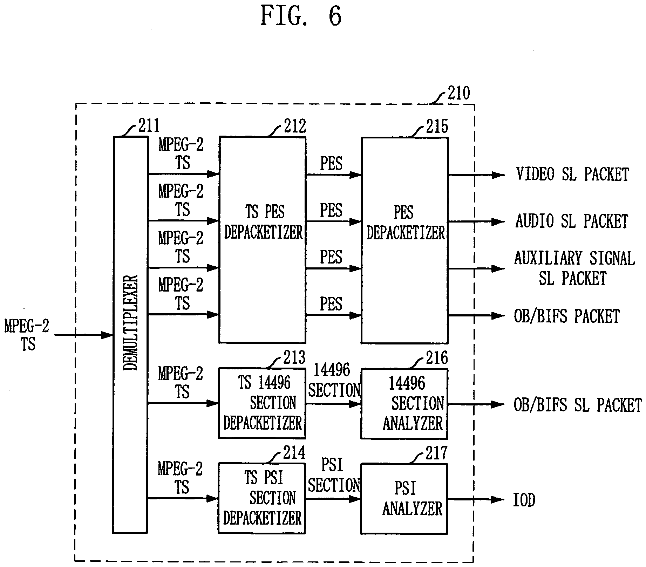

Fig. 6 is a block diagram illustrating a M2 over M4 module shown in Fig. 5.

Referring to Fig. 6, the M2 over M4 module 210 includes a demultiplexer 211, a TS PES depacketizer 212, a TS to 14496 section depacketizer 213, a TS to PSI section depacketizer 214, a PES to depacketizer 215, a 14496 section analyzer 216, and a PSI section analyzer 217.

The demultiplexer 211 demultiplexes a multiplexed MPEG-2 TS from the outside to a video MPEG-2 TS, an audio MPEG-2 TS, an auxiliary signal MPEG-2 TS, an OD/BIFS MPEG-2 TS, a 14496 section MPEG-2 TS, and a PSI MPEG-2 TS and outputs the MPEG-2 transport streams. The TS PES depacketizer 212 receives the video MPEG-2 TS, the audio MPEG-2 TS, the auxiliary signal MPEG-2 TS, the OD/BIFS MPEG-2 TS, the 14496 section MPEG-2 TS, and the PSI MPEG-2 TS from the demultiplexer 211 and depacketizes the received MPEG-2 TSs to PES packets. Then, the TS PES depacketizer 212 outputs the PES packets to the PES depacketizer 215. The PES depacketizer 215 receives the video PES packet, the audio PES packet, the auxiliary signal PES packet, and the OD/BIFS PES packet from the TS PES depacketizer 212. Then, the PES depacketizer 215 depacketizes the received PES packets to a video SL packet, an audio SL packet, an auxiliary signal SL packet, and an OD/BIFS SL packet.

The TS 14496 section depacketizer 213 receives a 14496 section MPEG-2 TS and depacketizes the received 14496 section MPEG-2 TS to a 14496 section and outputs the 14496 section to the 14496 section analyzer 216. The TS PSI section depacketizer 214 receives a PSI MPEG-2 TS and depacketizes the received PSI MPEG-2 TS to a PAT section (PA-section) and a MPT section (PM_section) and outputs the PAT section and the MPT section to the PSI section analyzer 217. The 14496 section analyzer 216 receives a 14496 section from the TS to 14496 section depacketizer 213, extracts an OD/BIFS SL packet therefrom, and outputs the extracted OD/BIFS SL packet. The PSI section analyzer 217 receives the PAT section and the PMT section, extracts the IOD data therefrom, and outputs the extracted IOD data.

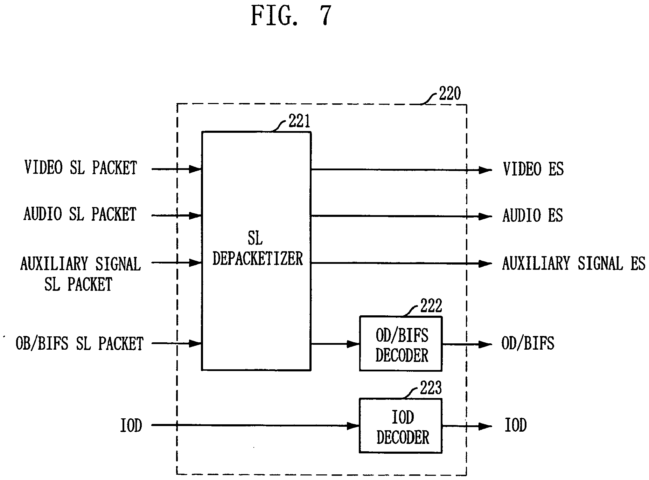

Fig. 7 is a block diagram illustrating a system decoding module shown in Fig. 5.

As shown in Fig. 7, the system analyzing module 220 includes a SL depacketizer 221, an OD/BIFS decoder 222, and an IOD decoder 223.

The SL depacketizer 221 receives a video SL packet, an audio SL packet, an auxiliary signal SL packet, and an OD/BIFS SL packet from the M2 over M4 module 210, and depacketizes each of the received packets to a video ES, an audio ES, an auxiliary signal ES, and an OD/BIFS ES. Then, the SL-packetizer 221 outputs the video ES to a video decoder 508, the audio ES to an audio decoder 504, the auxiliary signal ES to the super frame divider 506, and the OD/BIFS ES to an OD/BIFS decoder 222.

The OD/BIFS decoder 222 receives OD/BIFS encoding data from the SL depacketizer 221 and decodes the OD/BIFS encoding data. The OD/BIFS decoder 222 outputs the decoded BIFS information to the picture generating module (not shown). The decoded OD information is used at each of media decoders for initialization. The IOD. decoder 223 receives IOD encoded data, decodes the IOD encoded data, and outputs the decoded data. The decoded IOD data is used to extract OD/BIFS data.

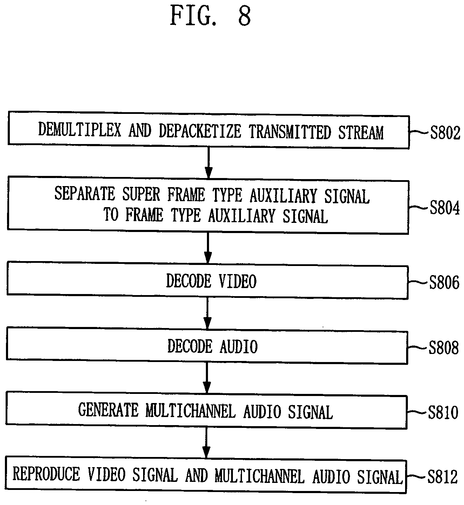

Fig. 8 is flowchart illustrating a multimedia reproducing method in accordance with an embodiment of the present invention.

Hereinafter, a multimedia reproducing method according to an embodiment of the present invention will be described with reference to Figs. 5 to 7.

At first, the depacketizer 502 generates an audio ES, a super frame auxiliary signal Es, and a video ES by performing a demultiplexing process and a MPEG-2 TS depacketizing process on a received MPEG-2 TS stream at step S802. Then, the super frame divider 506 divides a super frame auxiliary signal to a plurality of auxiliary signal frames at step S804. Then, the video decoder 508 generates an image by decoding the video ES, and the stereo audio decoder 504 generates a stereo audio signal by decoding the audio ES at step S808. Then, the multichannel audio generator 510 generates a multichannel audio signal by receiving the stereo audio signal and the auxiliary signal frames at step S810. The generated multichannel audio and video signals are reproduced at step S812.

The above described method according to the present invention can be embodied as a program and stored on a computer readable recording medium. The computer readable recording medium is any data storage device that can store data which can be thereafter read by the computer system. The computer readable recording medium includes a read-only memory (ROM), a random-access memory (RAM), a CD-ROM, a floppy disk, a hard disk and an optical magnetic disk.

While the present invention has been described with respect to certain preferred embodiments, it will be apparent to those skilled in the art that various changes and modifications may be made without departing from the scope of the invention as defined in the following claims.

### INDUSTRIAL APPLICABILITY

An apparatus and method for transmitting and reproducing a multichannel audio signal according to an embodiment of the present invention can be applied to broadcasting services and multimedia services that provides audio, such as digital multimedia broadcasting (DMB), Internet broadcasting, digital broadcasting, digital movie, DVD, and moving picture contents. Particularly, the apparatus and method for transmitting and reproducing a multichannel audio signal according to the present invention can be applied to a service that stores, transmits, and reproduces an audio signal using a MPEG-2 TS such as DMB.

## Claims

1. An apparatus for transmitting a multichannel audio signal, comprising:
a multichannel audio down-mixer (102) for receiving a multichannel audio signal and transforming the received multichannel audio signal to a down-mixed audio signal and an auxiliary signal;
a super frame generator (106) for generating a super frame auxiliary signal by combining a plurality of auxiliary signal frames; and
a packetizer (110) for packetizing the super frame auxiliary signal.

2. The apparatus of claim 1, further comprising:
a down-mixed audio encoder for compressing and encoding the down-mixed audio signal, wherein
said packetizer is adapted to packetize the encoded down-mixed audio signal.

3. The apparatus of claim 1, wherein the super frame generator generates one super frame auxiliary signal by combining a predetermined number of auxiliary signal frames,
where the predetermined number is decided according to a digital multimedia broadcasting DMB broadcasting environment.

4. The apparatus of claim 1, further comprising a video encoder for encoding a video signal, wherein the packetizer packetizes the encoded video signal from the video encoder.

5. The apparatus of claim 1, wherein the packetizer performs MPEG-2 TS packetization, and/or
wherein the down-mixed audio signal is one of a stereo audio signal and a mono audio signal.

6. A method for transmitting a multichannel audio signal, comprising the steps of:
receiving a multichannel audio signal and transforming the received multichannel audio signal to a down-mixed audio signal and an auxiliary signal (S402, S404);
generating one super frame auxiliary signal by combining a plurality of auxiliary signal frames (S406); and
packetizing said super frame auxiliary signal (S410).

7. An apparatus for reproducing a multichannel audio signal by receiving a packetized down-mixed audio signal and a packetized super frame auxiliary signal, comprising:
a depacketizer (S20) for generating a down-mixed audio signal and a super frame auxiliary signal by depacketizing the packetized down-mixed audio signal and the packetized super frame auxiliary signal;
a super frame divider (S60) for dividing the super frame auxiliary signal to a plurality of auxiliary signal frames;
and
a multichannel audio generator (S10) for receiving the down-mixed audio signal and the auxiliary signal of the frames and generating a multichannel audio signal.

8. The apparatus of claim 7, wherein the depacketizer performs MPEG-2 TS depacketization, and/or
wherein the down-mixed audio signal is one of a stereo audio signal and a mono audio signal.

9. The apparatus of claim 7, further comprising a video decoder for receiving a coded video signal and decoding the coded video signal.

10. The apparatus of claim 7, wherein the depacketizer receives the packetized and encoded video signal, generates a coded video signal, and provides the coded video signal to the video decoder.

11. A method for reproducing a multichannel audio signal by receiving a packetized down-mixed audio signal and a packetized super frame auxiliary signal, comprising the steps of;
Generating a down-mixed audio signal and a super frame auxiliary signal by depacketizing the packetized down-mixed audio signal and the packetized super frame;
dividing the super frame auxiliary signal to auxiliary signals of a plurality of frames; and
generating a multichannel audio signal by receiving the down-mixed audio signal and the auxiliary signal frames

12. The method of claim 11, further comprising: the steps as carried out by one of the modules as defined in one of claims 8 to 10.

## Patentansprüche

1. Eine Vorrichtung zum Übertragen eines Multikanal-Audiosignals, aufweisend:
Einen Multikanal-Audio-Down-Mixer (102) zum Empfangen eines Multi-Kanal-Audiosignals und zum Transformieren des empfangenen Multikanal-Audiosignals in ein heruntergemischtes Audiosignal und ein Hilfssignal;
einen Superframe-Generator (106) zum Erzeugen eines Superframe-Hilfssignals durch Kombinieren einer Mehrzahl von Hilfssignal-Frames; und
einen Packetierer (110) zum Packen des Superframe-Hilfssignals.

2. Die Vorrichtung nach Anspruch 1, ferner aufweisend:
Einen heruntergemischten Audioencoder zum Komprimieren und Codieren des heruntergemischten Audiosignals, wobei
der Packetierer angepasst ist, zum Packen des codierten heruntergemischten Audiosignals.

3. Die Vorrichtung nach Anspruch 1, wobei der Superframe-Generator ein Super-Hilfssignal durch Kombinieren einer vorbestimmten Anzahl von Hilfssignalframes erzeugt, wobei die vorbestimmte Anzahl entschieden wird in Übereinstimmung mit einer digitalen Multimedia-Broadcasting-DMB-Broadcasting-Umgebung.

4. Die Vorrichtung nach Anspruch 1, ferner aufweisend einen Videoencoder zum Codieren eines Videosignals, wobei der Packetierer das codierte Videosignal von dem Videoencoder packt.

5. Die Vorrichtung nach Anspruch 1, wobei der Packetierer eine MPEG-2-TS-Packetierung durchführt und/oder wobei das heruntergemischte Audiosignal eines von einem Stereoaudiosignal und einem Monoaudiosignal ist.

6. Ein Verfahren zum Übertragen eines Multikanal-Audiosignals, aufweisend die Schritte:
Empfangen eines Multikanal-Audiosignals und Transformieren des empfangenen Multikanal-Audiosignals in ein heruntergemischtes Audiosignal und ein Hilfssignal (S402, S404);
Erzeugen eines Superframe-Hilfssignals durch Kombinieren einer Mehrzahl von Hiftssignalframes (S406); und
Packen des Superframe-Hilfssignals (S410).

7. Eine Vorrichtung zum Wiedergeben eines Multikanal-Audiosignals durch Empfangen eines gepackten heruntergemischten Audiosignals und eines gepackten Superframe-Hilfssignals, aufweisend:
Einen Entpacker (520) zum Erzeugen eines heruntergemischten Audiosignals und eines Superframe-Hilfssignals durch Entpacken des gepackten heruntergemischten Audiosignals und des gepackten Superframe-Hilfssignals;
einen Superframe-Teiler (560) zum Teilen des Superframe-Hilfssignals in eine Mehrzahl von Hilfssignalframes; und
einen Multikanal-Audiogenerator (510) zum Empfangen des heruntergemischten Audiosignals und des Hilfssignals der Frames und zum Erzeugen eines Multikanal-Audiosignals.

8. Die Vorrichtung nach Anspruch 7, wobei der Packetierer eine MPEG-2-TS-Entpackung durchführt, und/oder
wobei das heruntergemischte Audiosignal eines von einem Stereoaudiosignal und einem Monoaudiosignal ist.

9. Die Vorrichtung nach Anspruch 7, ferner aufweisend einen Videodecoder zum Empfangen eines codierten Videosignals und zum Decodieren des codierten Videosignals.

10. Die Vorrichtung nach Anspruch 7, wobei der Entpacker das gepackte und codierte Videosignal empfängt, ein codiertes Videosignal erzeugt und das codierte Videosignal an den Videodecoder liefert.

11. Ein Verfahren zum Wiedergeben eines Multikanal-Audiosignals durch Empfangen eines gepackten heruntergemischten Audiosignals und eines gepackten Superframe-Hilfssignals, aufweisend folgende Schritte:
Erzeugen eines heruntergemischten Audiosignals und eines Superframe-Hilfssignals durch Entpacken des gepackten heruntergemischten Audiosignals und des gepackten Superframes;
Teilen des Superframe-Hilfssignals in Hilfssignale einer Mehrzahl von Frames; und
Erzeugen eines Multikanal-Audiosignals durch Empfangen des heruntergemischten Audiosignals und des Hilfssignalframes.

12. Das Verfahren nach Anspruch 11, ferner aufweisend:
Die Schritte wie ausgeführt durch eines der Module wie in einem der Ansprüche 8 bis 10 definiert.

## Revendications

1. Appareil permettant de transmettre un signal audio multicanal comprenant ;
un mélangeur-abaisseur audio multicanal (102) permettant de recevoir un signal audio multicanal et de transformer le signal audio multicanal reçu en un signal audio mélangé-abaissé et un signal auxiliaire ;
un générateur de supertrame (106) permettant de générer un signal auxiliaire de supertrame en combinant une pluralité de trames de signal auxiliaire ; et
un dispositif de mise en paquet (110) permettant de mettre en paquet le signal auxiliaire de supertrame.

2. Appareil selon la revendication 1, comprenant en outre :
un encodeur audio mélangé-abaissé permettant de compresser et d'encoder le signal audio mélangé-abaissé, dans lequel
ledit dispositif de mise en paquet est adapté pour mettre en paquet le signal audio mélangé-abaissé encodé.

3. Appareil selon la revendication 1, dans lequel le générateur de supertrame génère un signal auxiliaire de supertrame en combinant un nombre prédéterminé de trames de signal auxiliaire, où le nombre prédéterminé est décidé selon un environnement de radiodiffusion DMB (radiodiffusion multimédia numérique) (1).

4. Appareil selon la revendication 1, comprenant en outre un encodeur vidéo permettant d'encoder un signal vidéo, dans lequel le dispositif de mise en paquet met en paquet le signal vidéo encodé à partir de l'encodeur vidéo.

5. Appareil selon la revendication 1, dans lequel le dispositif de mise en paquet effectue une mise en paquet MPEG-2 TS, et/ou
dans lequel le signal audio mélangé-abaissé est l'un parmi un signal audio stéréo et un signal audio mono.

6. Procédé de transmission d'un signal audio multicanal, comprenant les étapes de :
réception d'un signal audio multicanal et transformation du signal audio multicanal reçu en un signal audio mélangé-abaissé et un signal auxiliaire (S402, S404) ;
génération d'un signal auxiliaire de supertrame en combinant une pluralité de trames de signal auxiliaire (S406) ; et
mise en paquet dudit signal auxiliaire de supertrame (S410).

7. Appareil permettant de reproduire un signal audio multicanal en recevant un signal audio mélangé-abaissé mis en paquet et un signal auxiliaire de supertrame mis en paquet, comprenant :
un dépaquetteur (520) permettant de générer un signal audio mélangé-abaissé et un signal auxiliaire de supertrame en dépaquettant le signal audio mélangé-abaissé mis en paquet et le signal auxiliaire de supertrame mis en paquet ;
un diviseur de supertrame (560) permettant de diviser le signal auxiliaire de supertrame en une pluralité de trames de signal auxiliaire ; et
un générateur audio multicanal (510) permettant de de recevoir le signal audio mélangé-abaissé et le signal auxiliaire des trames et de générer un signal audio multicanal.

8. Appareil selon la revendication 7, dans lequel le dépaquetteur effectue un dépaquettage MPEG-2 TS et/ou
dans lequel le signal audio, mélangé-abaissé est l'un parmi un signal audio stéréo et un signal audio mono.

9. Appareil selon la revendication 7, comprenant en outre un encodeur vidéo permettant de recevoir un signal vidéo encodé et de décoder le signal vidéo encodé.

10. Appareil selon la revendication 7, dans lequel le dépaquetteur reçoit le signal vidéo mis en paquet et encodé, génère un signal vidéo encodé et fournit le signal vidéo encodé au décodeur vidéo.

11. Procédé de reproduction d'un signal audio multicanal en recevant un signal audio mélangé-abaissé
mis en paquet et un signal auxiliaire de supertrame mis en paquet, comprenant les étapes de :
génération d'un signal audio mélangé-abaissé et d'un signal auxiliaire de supertrame en dépaquettant le signal audio mélangé-abaissé mis en paquet et la supertrame mise en paquet ;
division du signal auxiliaire de supertrame en signaux auxiliaires d'une pluralité de trames ; et
génération d'un signal audio multicanal en recevant le signal audio mélangé-abaissé et les trames de signal auxiliaire.

12. Procédé selon la revendication 11, comprenant en outre : les étapes telles qu'elles sont réalisées par un des modules tels que définis dans l'une des revendications 8 à 10.
